# EUROPEAN PATENT APPLICATION

(11) **EP 4 257 455 A1**
(43) Date of publication of application: **11.10.2023**
(21) Application number: 22167509.3
(22) Date of filing: 08.04.2022
(51) Int. Cl.: B62D 21/15, B29C 43/14

(54) **IMPACT PROTECTION PLATE AND METHOD OF PRODUCING SUCH A PLATE**

(71) Applicant: Autoneum Management AG, 8406 Winterthur (CH)
(72) Inventor: Gaudino, Ciro, 8400 Winterthur (CH); Schürmann, Jeremias, 8005 Zürich (CH)

(57) **Abstract**

Impact protection plate for a vehicle comprising at least an impact layer with an outer surface for receiving the impact comprising at least one fiber reinforced thermoplastic polymer layer, and whereby the impact protection plate further comprises a spacer layer comprising at least one thermoplastic polymer layer, formed in a 3-dimensional shape with one or more protrusions, and whereby the impact layer and spacer layer are at least over part of their surface materially connected to each other forming one or more cavities between the impact layer and the spacer layer.

## Description

### Technical Field

The invention is directed to an impact protection plate and a method of producing such an impact protection plate.

### Background Art

Impact protection plates are used in particularly underneath the car to cover and or protect vulnerable components, like a traction battery box, from severe impact or deformation with road debris, obstacles, like curb stones, moving bollards or stuck objects on rough roads. These plate as they are placed underneath the car in general need to be stiff structures.

The primary material used for protection plates has traditionally been aluminium, although there has been a recent shift towards thermoplastic composite materials.

Composite material is defined as a structural material made of plastic within which a fibrous material, such as glass fibers, is embedded. For instance glass fibers, either as copped fibers, endless filaments, glass mats or textiles, are embedded in a thermoplastic resin layer. However, the use of composites with glass fibers, in particular long glass fibers or endless filaments makes any design with deep drawn features, ribs or beading, difficult to produce, as neither the tapes nor the organo-sheets have good drape-ability and lack elastic stretch, needed for deep moulding. Hence the process becomes arduous and costly.

A further drawback of these type of materials is the need for application of tapes or fabrics in a dedicated pattern to obtain the correct impact resistance on the right locations. Any moulding action may disturb or even impair such a layout.

Alternative protection plates are made of solid glass mat thermoplastic (GMT) material. A certain amount of freedom is given to obtain a 3-dimensional surface structure, however this results in a solid piece. The part are heavy and may not meet the requirements for Impact protection as given by the car makers.

There is thus the need of impact protection plates that are substantially lighter than prior-art protection plates based on composite materials or aluminium, but that, at the same time, feature the same impact protection and can be formed in more intricate 3D shapes.

### Summary of invention

The object of the invention is achieved by an impact protection plate according to claim 1, a method for producing such an impact protection plate according to claim 12.

The object is achieved by an impact protection plate for a vehicle comprising at least an impact layer with an outer surface for receiving the impact comprising at least one fiber reinforced thermoplastic polymer layer, and whereby the impact protection plate further comprises a spacer layer comprising at least one thermoplastic polymer layer, formed in a 3-dimensional shape with one or more protrusions, and whereby the impact layer and spacer layer are at least over part of their surface materially connected to each other forming one or more cavities between the impact layer and the spacer layer.

By the combination of a stiff impact layer that is substantially flat after the moulding of the part and a spacer layer that still adds to the stiffness but is from a material that can more easily formed in a more intricate 3 dimensional (3D) shape, it is possible to create an impact protection plate that is energy saving in the production and easier to make.

Surprisingly, the addition of a spacer layer with one or more protrusion to the impact layer creates not only a spacer, which for instance can transfer the impact to dedicated areas on the part protection, but the cavities created between both plates help also to thermally insulate the vehicle part protected.

The spacer layer creates the ability to provide a large temperature delta between the external ambient temperature outside the impact protection plate and the temperature experienced at the side between the spacer layer and the vehicle part, for instance a battery housing. While the vehicle is running or charging, the active cooling channels within the battery case control the temperature of the battery cells to optimize the running conditions. However, while the vehicle is not in operation there is no active control of the battery cells. Here, the thermal insulation provided by the cavities with preferably air between the impact protection plate and the battery case due to the topography of the spacer plate can help limit the temperature transmitted to and from the battery cells, Furthermore the protrusions also function as blocking elements between the impact protection plate and the surface of the adjacent part, preventing air drafts. However also during parking a vehicle on a hot roadway in a warm climate or/and on a hot sunny day will radiate heat into a battery case or impact plate. If these are metallic or there is no insulation between the plate and the battery case, a large portion of this heat will be transmitted into the battery cells, limiting their performance and reducing the life of the cells. Similarly, in cases where temperatures can be well below the battery's optimal temperature, the insulation provided by the formed spacer layer can again protect the battery cells from excessively low temperatures, again improving cell performance and extending the battery life of the BEV.

The impact layer comprises at least one fiber reinforced thermoplastic polymer layer. Preferably the fiber reinforcement of the impact layer is based on embedded fibers and or filaments in the thermoplastic polymer. The weight of embedded fibers and or filaments is at least 60% by weight of the impact layer, preferably at least 70% by weight, more preferably at least 80% by weight.

The spacer layer may comprise fiber reinforcement. The fiber reinforcement of the spacer layer may be based on embedded fibers and or filaments in the thermoplastic polymer. Preferably the fiber content of the layer is not more than 50% by weight based on the full layer, more preferably between 20% and 35% by weight based on the full layer.

The reinforcing fibers are preferably short staple fibers with an initial average fiber length of up to 10 mm, or long staple fiber with an initial average fiber length between 5 and 25 mm. Alternatively it may be endless filaments. Although it needs to be remarked, that in particular glass fibers are known to break during the production of the part, in particular if extrusion or compression moulding is used, the average fiber length found in the part might be lower.

Preferably the thermoplastic polymer for either the impact layer and/or the spacer layer may be one chosen from the group of thermoplastic polymers, preferably polyolefin, like polypropylene, or polyamides, or polyesters, or thermoplastic polyurethane.

Preferably the thermoplastic polymer is one of polypropylene PP, polyamide-6 PA6, polyamide 66 PA66, high density polyethylene HDPE, low density polyethylene LDPE, polyethylene terephthalate PET, Polyphenylene sulfide (PPS), polycarbonate.

The material indicated is the base material of the layer, any additives, process aiding components or colours may be included in the layer.

In addition non-reinforcement or weak reinforcing fillers may be added to one or both layers to reduce cost. For instance, the non-reinforcement filler could be at least one of Talcum, BaCO₃, CaCO₃, silica or carbon black, mica platelets.

Optimally, the both the impact layer and the spacer layer might be based on the same type of thermoplastic polymer to obtain a good material binding between the impact layer and the spacer layer.

According to the definitions proposed by the American Society for Testing and Materials (ASTM-D-883), a filler is a relatively inert material added to a plastic to modify its strength, permanence, working properties, or other qualities, or to lower costs.

In contrast, according to ASTM-D-883, a reinforced plastic is defined as one with some strength properties greatly superior to those of the base resin, resulting from the presence of high-strength fillers imbedded in the composite. The reinforcing fillers are usually fibers, fabrics, or mats made of fibers.

The spacer layer is preferably made of a thermoplastic sheet material with fiber reinforcement, for instance a polypropylene/glass fiber material or a polyamide/glass-fiber material. It has a preferred fiber content of not more than 50%, preferably between 15 and 30%. And the fibers used are short staple fibers mainly. This material may be adapted such that it is easily process able in a vacuum forming machine after preheating the blank sheets to form in a 3-D shape with multiple protrusions.

The spacer layer is formed in a 3-dimensional shape with one or more protrusions, such that after both layers are at least over part of their surface materially connected to each other, one or more cavities are formed between the impact layer and the spacer layer. The formed protrusion raises the spacer plate away from the plane of contact and bonding between both layers thereby creating cavities or cavities between both layer. Cavity is defined here as an empty space within a solid object, whereby the solid object is built by both layers together forming the impact protection plate. The cavity or "empty space" is an area of the part that does not contain any of the materials forming either the impact layer or the spacer layer, under normal process condition the cavity will contain air. Optionally, the cavity may be filled with an inert gas, foam or gel to further enhance the thermal insulation of the part.

Preferably the one or more protrusions are a wavelike pattern of alternating elevations and depressions forming ribs or beading. The wavelike pattern may have a cross sectional profile in a saw-tooth, trapezoidal, sinusoidal or toroidal bead shape, or a combination of such cross sectional profile shapes. Preferably, the cross section might be rounded or trapezoid.

The wavelike pattern can be such that the ribs are directed between the front and rear wheels or perpendicular to this direction, hence directed from the left side of the car to the right side. However they may also be placed in an angle or in a V shape pattern.

Alternatively the one or more protrusions may be discrete elevations, preferably the shape of the elevations are in a dome, cone, pyramidal, or egg-box shape.

In case of one protrusion this might be either one larger rib of bead on a spacer layer which is fully covering the impact layer. However it might also be a smaller spacer layer with one or more protrusions that is not covering the full surface of the impact layer but only local, while also multiple of these smaller spacer layer elements might be placed on dedicated area to obtain only local spacer layers with one or more protrusions.

A combination of local placed ribs or beading combined with discrete elevated protrusion might be possible.

Preferably the protrusions have rounded top areas, defined as those areas of the spacer layer the furthers away from the impact layer.

The protrusions might be placed in a pattern or random order.

The protrusions used might be different in height and or width such that certain are more dedicated to the redirection of any impact while other are smaller and not in direct contact with the underlying construction upon impact but may be increasing the thermal insulation of the full plate.

Alternative or in addition, the protrusions may mirror the shape of the body of the vehicle part or parts adjacent the impact protection plate. In particular such that the areas which would be first in contact with the adjacent part after an impact, are placed opposite a stronger area of the body of the car for instance strengthening beams or impact protection cages that can further absorb any leftover impact energy. These areas might be even dedicated to absorb energy, so any impact energy transmitted through the impact protection plate is countered by these impact absorbing and or redirecting areas on the body of the car.

The spacer layer may be covering substantially the full surface of the impact layer or may be covering only a dedicated area. For instance the impact protection plate may be extended beyond the area to be protected and work as a standard impact protection plate in adjacent areas, without the need for an additional thermal insulation layer or because the area is not high enough to create a thermal insulation layer in the form of the spacer layer.

Alternative, for instance in case saving of weight is an issue, the spacer layer may be used only in smaller areas separated from each other, in this case the spacer layer is divided in smaller layers for a dedicated area of the part and in between the impact protection plate is only the impact layer.

Preferably, the cavity formed comprises at least one venting hole, preferably in the spacer layer or in between the spacer layer and the impact layer. The venting hole might be a remnant of the production process.

Surprisingly the venting hole not only prevents the collapse of the cavities during cooling of the part. But they also function as pressure compensation during changes in ambient temperature, preventing the collapse of the cavities and/or delamination of the two layers in use due to under or over pressure in the cavities. This also reduces the risk of warping .

Preferably the impact layer comprises at least one sheet of at least one of short fibers, long fibers, woven, knitted, non-crimp fabric, textile or unidirectional fibers and/or filaments embedded in a thermoplastic polymer material.

The reinforcement fibers and/or filaments for the impact layer or for the spacer layer might be based on at least one of glass, carbon, aramid, basalt, or cellulose, or any mixture of one or more of such materials.

Preferably, the impact layer is a multilayer material.

The impact layer may comprises of at least a core layer made of at least one fiber reinforced thermoplastic polymer and further comprising at least one skin layer made of unidirectional tapes, organo sheets or fiber reinforced material embedded in thermoplastic polymer. The same material specifications as defined for the spacer layer maybe used for the core layer. However the amount of reinforcement fibers might be higher to obtain a good impact resistance. To prevent warping preferably both sides of the core layer are having the same cover layer or stack of layers. However the spacer layer may be used as second cover layer and the amount of skin layers used on the opposite surface of the core layer is chosen such that warpage is prevented or minimised.

Alternatively the impact layer may comprise a multitude of organo sheets, UD tapes or NCF tapes or a combination of these materials.

The materials used to make the multilayer construction, may be combined in a single layer and sold as a semi-finished material that can be heated and used directly afterwards. The orientation of the alignment of these layers can vary.

Organo sheets - as used throughout this document- are semi-finished materials with, preferably carbon, glass, basalt, or aramid, fiber fabrics embedded in a thermoplastic polymer matrix. Preferably the fiber fabrics are one of a knit or woven textile structure. Fiber materials for the fabric may include mineral fibers like glass, aramid, carbon, and/or natural fibers.

Unidirectional (UD) tapes -as used throughout this document- are endless fibre-reinforced tapes of different widths with unidirectional aligned reinforcing fibres like glass or carbon fibres embedded in a thermoplastic matrix. For UD tapes the same fibers and thermoplastic matrix as for organo sheets may be used. Preferably, endless filaments may be used in UD tapes.

Non-crimp fabrics (NCF) -as used throughout this document- are similar to UD tapes but in the case of NCF tapes the aligned reinforcing fibers are held together by a weft yarn running perpendicular to the UD yarn which is in the warp direction. In such structures, the use of additional polymer or glass filaments in the weft direction does not interrupt the UD orientation of the filaments too much and facilitates enough rigidness of the weave structure to hold any desirable shape. The number of weft fibers is significantly lower that the number of warp fibers. For NCF tapes the same fibers and thermoplastic matrix as for organo sheets may be used.

Preferably endless filaments may be used in NCF tapes. Typically, NCF tapes contain several glass fiber layers with specific orientation. Examples can be NCF layers with two layer in 0° and 90° orientation, four layers in 0 °, 90°/90°/0° or more layers and any angle between 0° and 90°. Alternating direction of the layering enables an equal stiffness in all directions of the part.

The cover layer or layers of the sandwich material forming the impact layer may be formed by either UD tapes, NCF tapes or organo sheets, either in a single layer or in multiple layers.

Alternatively cover layers, in the form of UD tapes, organo sheets or NCF tapes are only used on specific areas of the impact protection panel to create a local reinforcement, or in stripes to increase the stiffness of the panel.

The core layer of the impact layer may be formed by any method known in the art including but not restricting to thermoformed plates, for instance by an injection moulding compound received between the cover layers, or an extruded compound received between the cover layers, compressed to form the impact layer. The preformed impact layer may be used still warm from the forming process, or reheated for instance by an infrared oven.

To prevent sticking of either the spacer layer or the impact layer, surfaces may be covered with a light nonwoven scrim layer. This layer might end up between the impact layer and spacer layer upon the final moulding step without impacting the moulding and or lamination of the final part. These layers are thin enough to let the thermoplastic polymer pass through and materially connect or bond to the opposite layer.

At least one, preferably all, of the components used to make the impact protection plate according to the invention, may be based on recycled or reclaimed origin. Preferably one or both layer may comprise shredded or scrap material that is incorporated in the polymer material mixture, and that may comprise part of the fibers long enough to function as a reinforcement fiber or as an ultrashort fiber functioning as a non-reinforcement fiber. The fiber type in the scrap material might be different from the main fiber type.

The impact protection plate according to the invention may comprise additional layers for instance a nonwoven scrim layer at the surface contacting the mould to prevent sticking of the layer to the mould surface.

The spacer layer may need local reinforcement patches for increased stiffness or to prevent cracking, additional UD or NCF tapes for instance may be used for this, in particular as small patches rather than stripes over the full surface.

The impact plate according to the invention may be used on or in a passenger vehicle wherever a need for an impact protection and/or thermal insulation is needed, in particular under the traction battery housing or adjacent areas, under oil tanks, rear and front under shields, or any electronics that are prone to impacting damage.

### Method of producing the impact protection plate according to the invention

Method of producing the impact plate according to one of the preceding claims with at least the steps of:
1. Bringing at least one heated sheet of thermoplastic polymer material for the spacer layer in one part of a two part compression style mould, preferably the lower tool part, and vacuum forming the thermoplastic outer layer or layers against the mould surface by applying vacuum through the mould surface, and
2. Bringing a heated sheet for the impact layer onto the thus formed spacer layer in the lower mould, with both layers still hot enough to be draped, and closing the top mould to create a contact between both layers at dedicated areas to create a material connection between the layers while both layers are still sufficiently heated to allow bonding, whereby during and/or after the closing of the mould a reactive or nonreactive fluid or fluid mixture or gas is blown between both layers inside the cavities with one or more needle type channels such that cavity shape is maintained and one or more permanent venting holes are created after retraction of the needle at the end of the moulding step.

The final part is demoulded and further cooled. Any trimming or addition of appliances might be done during moulding or afterwards. Appliances likes means for mounting may be incorporated in the mould at the beginning or at intermediate stages.

The process has the advantage that the impact plate is still formed in a substantially flat position, while the spacer layer may integrate more deep drawn design features, like ribbing or beading. Protrusions, which could not be made by using the structural material of the impact layer on its own, are now a possibility to integrate into the design of the part without adding complexity.

Surprisingly, the areas where both materials are surface to surface connected are showing the full impact protection, while the areas where there is a cavity the full impact protection is still given.

Surprisingly the thus produced cavities between the formed protrusions in the spacer layer and the impact plate are increasing the thermal insulation of the area of the vehicle covered. This is a huge advantage for in particularly electronic equipment and batteries, prone to deterioration or malfunction when subjected to rapid changing temperatures or large deltas in temperature over a short time period.

Due to the combination of an impact layer and a spacer layer according to the invention the part may be designed lighter compared to the composite and metal parts according to the state of the art.

The impact layer may not be more than 7000g/m2, preferably between 2000 and 6000 g/m2, while the spacer layer may be not more than 5500g/m2, reducing the weight per m2 for the impact plate with 30% compared to state of art solutions.

The impact layer may have a thickness of between 2 and 6mm, preferably between 3 and 5 mm, while the spacer layer may have a thickness between 2 and 20mm, measured between the bonding plane or contact plane with the impact layer and the outer top of the protrusion.

### Brief description of drawings

Figure 1 is showing a car with an example for an impact protection plate according to the invention.
Figure 2 is showing a cut out section of an impact protection plate according to the invention.
Figure 3 is showing possible cross section profiles for protrusions in the spacer layer
Figure 4 is showing alternative protrusions for the spacer layer.
Figure 5 is showing the process of making the impact protection plate according to the invention.

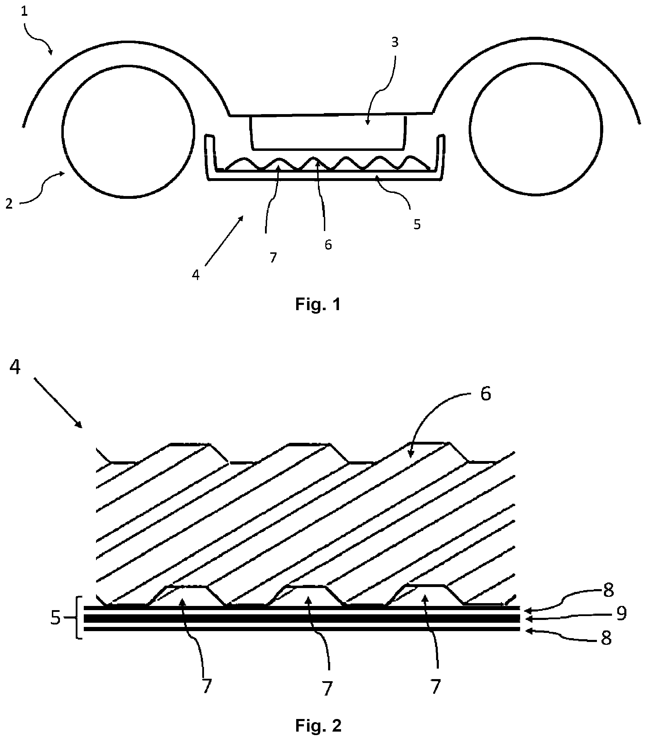

Figure 1 is showing a schematically the use of the impact protection plate according to the invention on a vehicle as a battery impact protection plate. A car body 1 and wheels 2 are indicating the normal layout of a passenger car. Underneath the passenger compartment a battery housing 3 with the cells or modules for the vehicle traction is placed. Battery housing including battery cells or modules are heavy structures, part because of the batteries themselves, but also because the housing is made of a solid metal to prevent damaging of the content. In the lower area the cooling plates may be placed. Newer designs combine the lower road facing panel of the battery housing, with the cooling plate function. The lower surface of the battery housing might even mirror and incorporate the shape of the cooling plates.(not shown)

Placing the cooling plate underneath the battery cells or modules, and combining it directly or indirectly with the lower panel of the battery housing bears a mayor risk. An impact might damage the lower surface of the cooling plate and impairs the cooling function, increasing the risk of an overheating battery system. However even without the risk of damage the lower surface of the battery box is exposed to draft underneath the surface of the car both during driving and at a standstill, while also the heat of surfaces like tarmac in the summer sun, might have an increased temperature and prevent the proper cooling of the batteries. In particularly when the car is not in use the battery temperature controls are not running either, hence the battery may be prone to extreme temperatures both high and low. The optimal battery operating temp is between 25 and 30°C, max 35°C.

Underneath the battery housing, an impact protection plate 4 according to the invention is placed with an impact layer 5 and a spacer layer 6 formed in a 3-dimensional shape with multiple protrusions. The spacer layer may be material connected to the impact plate on those areas of the layer that are closest to the surface of the other layer, forming closed cavities between both layers at the areas of the protrusions. The closed cavities work like air pockets, which provide thermal insulation. Surprisingly, also a lower amount of air pockets placed such that the area between elevations is enclosed between elevations and the opposite surface of the vehicle, may also create zones with standing air providing additional insulation. Hence not the full surface needs coverage with protrusions.

Surprisingly, the combination of the impact plate and the spacer layer is not only guiding the plate impact to the cage around the battery cells and/or to cooling plate areas that are void of running liquid but the insulation obtained by the cavities forming air pockets 7 provide enough thermal insulation to maintain a stable temperature in the battery housing.

The plate may be placed against the body of the battery housing or the any other car part that needs impact protection and might benefit from additional thermal insulation, such that no draft can run between the impact protection plate and the lower surface of the part to be protected. Preferably the ends of the impact layer are extended and shaped such that they may form a tray for the spacer layer. In particularly such that the impact protection plate may be mounted mainly by means for mounting connected to the impact layer solely.

The spacer layer may be fully covering the surface facing the part to be protected or the impact plate may be extending over the full surface of the car body area while only in the areas in need for additional thermal insulation the spacer layer is applied to create local insulating areas. Placing the part only where needed saves material and weight.

Preferably the part may be mounted to the car with a slight air gap of at least 2 mm between the spacer plate and the opposite surface.

Figure 2 is showing as example a part of an impact protection plate 4 with the spacer layer 6 having trapezoidal corrugations, whereby the flat surface is in contact with the underlying impact layer 5. A trapezoidal cross section has the benefit that the contacting surfaces between the layer is larger and enables a stronger binding between the layers compared to a sinusoidal corrugated layer. This may not only optimise the lamination between the layers, but also increases the stiffness of the impact layer 5. The impact layer 5 is shown here an example of a sandwich structure, having two cover layers 8 and a core layer 9.

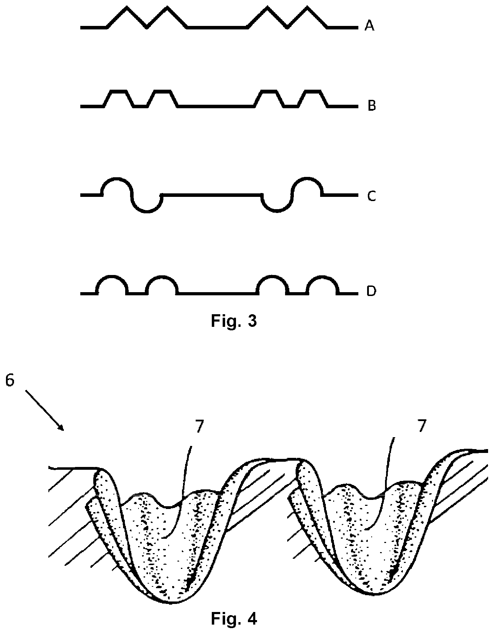

Figure 3 examples of possible protrusions in the form of corrugations. The corrugations may be any cross section of saw tooth A, trapezoidal B, sinusoidal C or toroidal bead profile D or a combination of such cross section profiles. Preferably the cross section might be rounded or trapezoid. In the figure is also recognisable that the corrugations are not necessary directly following each other, corrugation free areas may be placed in between corrugated areas.

Figure 4 is showing an example of alternative protrusions in the spacer layer in the form of discrete elevations in this case pyramidal or cone like shape with rounded top areas, defined as those areas of the spacer layer the furthers away from the impact layer. Showing cavities 7.

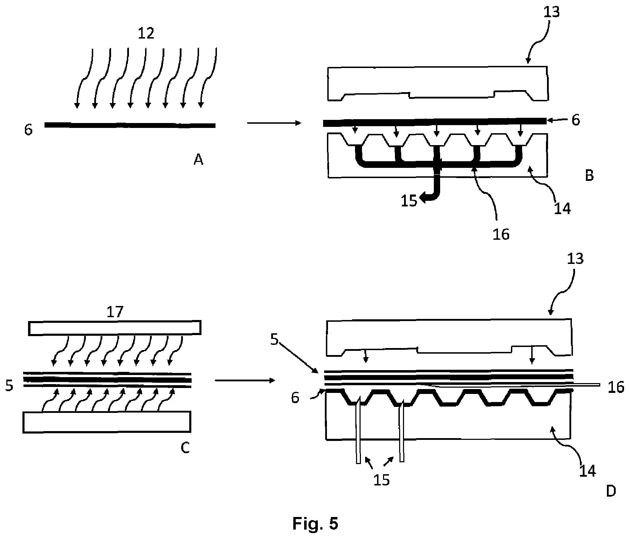

Figure 5 is showing schematically the process of producing the impact protection plate according to the invention.

Method of producing the impact protection plate according the invention with at least the steps of:
B. Bringing a heated sheet A of thermoplastic material for the spacer layer 6 in one part of a two part compression style mould 13,14, preferably the lower tool part 14, and vacuum forming the thermoplastic spacer layer against the mould surface by applying vacuum 15 through the mould surface, and
D. Bringing a heated sheet 17 for the impact layer 5 onto the thus formed spacer layer 6 in the lower mould 14, with both layers still hot enough to be draped, and closing the top mould 13 to create a contact between both layers at dedicated areas to create a material connection between the layers while both layers are still sufficiently heated to allow bonding, whereby during the closing of the mould a fluid or gas is blown between both layers inside the cavities with a needle type channel 15, 16 to maintain the cavity shape, prevent sagging of either layer, and creating a permanent venting hole in the cavities after retraction of the needle at the end of the moulding step.

The spacer layer 6 and the impact layer 5 may be heated in a separate step A and B. For instance by an infrared oven indicated with 12, or 17, depending on the thickness and the material used the layer can be heated from both sides or only from one side. The material should be soft enough to drape inside a mould without breaking or cracking.

Alternatively the impact layer 5 and or the spacer layer 5 is produced with a method known in the art and the still hot sheet material is directly used in the moulding steps. These methods might be for instance an injection moulding process, D-LFT process or compression moulding process.

The hot spacer layer 6 is placed on top of a lower mould 14 and immediate while still warm, vacuum moulded into the final shape for the spacer layer, the vacuum may be achieved with channels 15 within the lower mould connecting with the mould surface. In particularly in the areas furthers from the plane of the initial material layer on top of the mould. A slight thinning of the side walls within the protrusions may be occurring but need to be controlled to prevent creating holes in the spacer layer.

Optimally, the process is timed such that the hot impact layer is placed on top of the vacuum formed spacer layer, while the spacer layer is still warm. Having both layers still hot or at least warm improves the lamination of both layers, with lamination a material bonding between both layers is meant.

The impact layer 5 is placed on top of the formed spacer layer 6 in direct contact. At least one air supplying tube, 16 or 15, is put between the 2 layers either from the side 16 or from underneath 15 such that a fluid preferably air can be blown inside the cavities during the closing and final moulding step of the part. The tubes may be fine and preferably needle shaped to be able to subtract the tubes, for instance just before or during demoulding, while leaving a tiny hole. The fluid is blown inside the cavity such that the lower spacer layer is not pulled up again and at the same to time to prevent the impact layer from sagging inside the cavities. A further advantage is that with a slight overpressure inside the cavities the single protrusions are not collapsing during the cooling phase. By maintaining the tiny holes in the cavity a pressure compensation during the use of the part is given.

The surface of the impact layer facing away from the spacer, may also be formed in a 3-D shape, albeit staying close to an overall flat plane, for instance to create an aerodynamic surface and or to include small ribs to further increase the stiffness of the layer and thus the part overall.

## Claims

1. Impact protection plate for a vehicle comprising at least an impact layer with an outer surface for receiving the impact comprising at least one fiber reinforced thermoplastic polymer layer, **characterised in that** the impact protection plate further comprises a spacer layer comprising at least one thermoplastic polymer layer, formed in a 3-dimensional shape with one or more protrusions, and whereby the impact layer and spacer layer are at least over part of their surface materially connected to each other forming one or more cavities between the impact layer and the spacer layer.

2. Impact protection plate according to one of the preceding claims, whereby the thermoplastic polymer for either the impact layer and/or the spacer layer may be one chosen from the group of thermoplastic polymers, preferably polyolefin, like polypropylene, or polyamides, or polyesters, or thermoplastic polyurethane.

3. Impact protection plate according to one of the preceding claims, whereby the impact protection plate has at least 60% by weight, preferably at least 70% by weight, more preferably at least 80% by weight of fiber.

4. Impact protection plate according to one of the preceding claims whereby the spacer layer comprises reinforced fibers, preferably the fiber content of the layer is not more than 50% by weight, more preferably between 20% and 35% by weight.

5. Impact protection plate according to one of the preceding claims whereby the one or more protrusions are a wavelike pattern of alternating elevations and depressions forming ribs or beading, preferably with a cross section profile in a saw-tooth, trapezoidal, sinusoidal or toroidal bead shape, or a combination of such cross sectional profile shapes.

6. Impact protection plate according to one of the preceding claims, whereby the one or more protrusions are discrete elevations, preferably the shape of the elevations are in a dome, cone, pyramidal, or egg-box shape.

7. Impact protection plate according to one of the preceding claims, whereby the cavity comprises at least one venting hole through one of the adjacent layers.

8. Impact protection plate according to one of the preceding claims, whereby the impact layer comprises at least one sheet of at least one of short fibers, long fibers, woven, knitted, non-crimp fabric, textile or unidirectional fibers and or filaments embedded in a thermoplastic polymer material.

9. Impact protection plate according to one of the preceding claims whereby the impact layer is a multilayer material, with at least a core layer made of at least one fiber reinforced thermoplastic polymer, further comprising at least one skin layer made of unidirectional tapes, organo sheets or fiber reinforced material embedded in thermoplastic polymer.

10. Impact protection plate according to one of the preceding claims whereby the reinforcement fibers is at least one of glass fibers, carbon fiber, aramid fibers, basalt fibers, or cellulose based fibers or a mixture of such materials.

11. Impact protection plate according to one of the preceding claims whereby at least one of the components, preferably all, are based on recycled or reclaimed origin.

12. Method of producing the impact plate according to one of the preceding claims with at least the steps of:
1. Bringing a heated sheet of thermoplastic material for the spacer layer in one part of a two part compression style mould, preferably the lower tool part, and vacuum forming the thermoplastic outer layer against the mould surface by applying vacuum through the mould surface, and
2. Bringing a heated sheet for the impact layer onto the thus formed spacer layer in the lower mould, with both layers still hot enough to be draped, and closing the top mould to create a contact between both layers at dedicated areas to create a material connection between the layers while both layers are still sufficiently heated to allow bonding, whereby during and/or after the closing of the mould a reactive or nonreactive fluid or fluid mixture or gas is blown between both layers inside the cavities with one or more needle type channels such that cavity shape is maintained and one or more permanent venting holes are created after retraction of the needle at the end of the moulding step.
